(19) Europäisches Patentamt
European Patent Office
Office européen des brevets

(11) **EP 1 291 639 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(51) Int Cl.:
***G01N 11/16*** *(2006.01)*

(21) Anmeldenummer: **01121869.0**

(22) Anmeldetag: **11.09.2001**

(54) **Viskositäts-Messgerät**

Viscosity measuring device

Appareil de mesure de la viscosité

(84) Benannte Vertragsstaaten:
**AT BE CH CY DE DK ES FI FR GB GR IE IT LI LU MC NL PT SE TR**

(30) Priorität: **24.08.2001 EP 01120343**

(43) Veröffentlichungstag der Anmeldung:
**12.03.2003 Patentblatt 2003/11**

(73) Patentinhaber: **Endress + Hauser Flowtec AG**
**4153 Reinach BL 1 (CH)**

(72) Erfinder:
- **Drahm, Wolfgang, Dr.**
  **85435 Erding (DE)**
- **Rieder, Alfred, Dr.**
  **84032 Landshut (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 849 568     US-A- 4 524 610**
**US-A- 6 006 609**

**Beschreibung**

Die Erfindung betrifft ein Viskositäts-Meßgerät für ein in einer Rohrleitung strömendes Fluid sowie ein Verfahren zum Ermitteln einer Viskosität des Fluids.

In der Meß- und Automatisierungstechnik werden zur Ermittlung der Viskosität eines in einer Rohrleitung strömenden Fluids, insb. einer Flüssigkeit, oftmals solche Meßgeräte verwendet, die mittels eines Meßaufnehmers vom Vibrationstyp und einer daran angeschlossenen Meßgerät-Elektronik, im hindurchströmenden Fluid innere Reibungskräfte bewirken und von diesen abgeleitet ein die jeweilige Viskosität repräsentierendes Meßsignal erzeugen.

Derartige Viskositäts-Meßgeräte sind z.B. in der US-A 45 24 610 oder in der WO-A 95/16 897 beschrieben, wobei die Viskositäts-Meßgeräte jeweils umfassen:

- einen Meßaufnehmer vom Vibrationstyp

   -- mit einem im wesentlichen geraden, mit der Rohrleitung kommunizierenden und im Betrieb vibrierenden Meßrohr zum Führen des Fluids,
   -- mit einer Erregeranordnung zum Vibrierenlassen des Meßrohrs,

      --- wobei eine gedachte Meßrohrmittelachse des vibrierenden Meßrohrs im wesentlichen in ihrer Form und Raumlage belassen wird, so daß das Meßrohr eine im zugewiesene statische Ruhelage praktisch nicht verläßt und

   -- mit einer Sensoranordnung zum Erfassen von Vibrationen des Meßrohrs und zum Erzeugen wenigstens eines die Vibrationen des Meßrohrs repräsentierenden Sensorsignals sowie

- eine Meßgerät-Elektronik, die

   -- einen die Erregeranordnung speisenden Erregerstrom und
   -- zumindest einen die Viskosität des Fluids momentan repräsentierenden Meßwert liefert,

- wobei die Meßgerät-Elektronik

   -- mittels des wenigstens einen Sensorsignals den Erregerstrom einstellt und
   -- mittels des Erregerstroms einen Reibungen im Fluid momentan repräsentierenden internen Zwischenwert erzeugt und

- wobei die Meßgerät-Elektronik den Viskositäts-Meßwert unter Verwendung des internen Zwischenwerts ermittelt.

Es hat sich hierbei jedoch gezeigt, daß der anhand des Erregerstroms ermittelte Viskositäts-Meßwert trotz, insb. auch unter Laborbedingungen, praktisch konstantgehaltener Viskosität und Dichte erhebliche Ungenauigkeiten aufweisen kann, die bis zu einem Hundertfachen der tatsächlichen Viskosität des Fluids betragen können.

In der US-A 45 24 610 wird bereits eine mögliche Ursache dieses Problems angedeutet, nämlich der Umstand, daß vom Fluid in das Meßrohr eingetragene Gasblasen sich an der Meßrohrwand anlagern können. Zur Umgehung des Problems wird ferner vorgeschlagen, den Meßaufnehmer so einzubauen, daß das gerade Meßrohr im wesentlichen senkrecht verläuft und somit ein Anlagern von Gasblasen verhindert wird. Hierbei handelt es sich jedoch um eine sehr spezielle und, insb. in der industriellen Prozeßmeßtechnik, nur sehr bedingt realisierbare Lösung. Zum einen müßte nämlich für diesen Fall die Rohrleitung, in die der Meßaufnehmer eingefügt werden soll, ggf. an diesen angepaßt werden und nicht umgekehrt, was dem Anwender wohl eher nicht zu vermitteln ist. Zum anderen kann es sich bei den Meßrohren, wie bereits erwähnt, auch um solche mit einer gekrümmten Rohrform handeln, so daß das Problem auch durch eine Anpassung der Einbaulage nicht gelöst werden kann. Es hat sich hierbei außerdem gezeigt, daß die vorgenannten Verfälschungen des Viskositäts-Meßwerts auch bei Verwendung eines senkrecht eingebauten, geraden Meßrohrs nicht wesentlich verringert werden können. Außerdem lassen sich die im weiteren festgestellten Schwankungen des Viskositäts-Meßwerts bei strömendem Fluid auf diese Weise ebenfalls nicht verhindern.

Ein Aufgabe der Erfindung besteht daher darin, ein Viskositäts-Meßgerät für Fluide anzugeben, das, insb. auch bei strömendem Fluid, einerseits von der Einbaulage des Meßrohrs und andererseits von den Schwingungen des Meßrohrs, insb. von deren Schwingungsamplitude, im wesentlichen unabhängig einen hoch genauen und möglichst robusten Viskositäts-Meßwert liefert.

Zur Lösung der Aufgabe besteht die Erfindung in einem Viskositäts-Meßgerät für ein in einer Rohrleitung strömendes Fluid, welches Viskositäts-Meßgerät umfaßt:

- einen Meßaufnehmer, insb. vom Biegeschwingungstyp,

  -- mit wenigstens einem mit der Rohrleitung kommunizierenden, im Betrieb vibrierenden Meßrohr zum Führen des Fluids und zum Erzeugen von im Fluid wirkenden Reibungskräften,
  -- mit einer Erregeranordnung zum Vibrierenlassen des wenigstens einen Meßrohrs sowie
  -- mit einer Sensoranordnung zum Erfassen von Vibrationen des Meßrohrs und zum Erzeugen wenigstens eines diese repräsentierenden ersten Sensorsignals und

- eine Meßgerät-Elektronik, die

  -- einen die Erregeranordnung speisenden Erregerstrom und
  -- einen eine Viskosität des Fluids momentan repräsentierenden Viskositäts-Meßwert liefert,

- wobei die Meßgerät-Elektronik

  -- vom wenigstens ersten Sensorsignal ein dem Einstellen des Erregerstroms dienendes Amplitudenstellsignal ableitet und
  -- anhand des wenigstens ersten Sensorsignals und anhand des Amplitudenstellsignals den Viskositäts-Meßwert ermittelt.

Außerdem besteht die Erfindung in einem Verfahren gemäß Anspruch 10 zum Ermitteln einer Viskosität eines in einer Rohrleitung strömenden Fluids.

- Ermitteln eines Inhomogenitäten im Fluid repräsentierenden zweiten internen Zwischenwerts unter Verwendung des Samplings sowie
- Erzeugen eines die Viskosität repräsentierenden Viskositäts-Meßwerts anhand der beiden internen Zwischenwerte.

Nach einer bevorzugten ersten Ausgestaltung des Viskositäts-Meßgeräts derErfindung schwingt das vibrierende Meßrohr zum Erzeugen von im Fluid wirkenden Reibungskräften zumindest anteilig in einem Biegeschwingungsmode.

Nach einer bevorzugten zweiten Ausgestaltung des Viskositäts-Meßgeräts der Erfindung ermittelt die Meßgerät-Elektronik zum Erzeugen des Viskositäts-Meßwerts anhand des wenigstens ersten Sensorsignals einen Geschwindigkeits-Meßwert, der die Reibungskräfte im Fluid verursachende Bewegungen repräsentiert.

Nach einer bevorzugten dritten Ausgestaltung des Viskositäts-Meßgeräts der Erfindung  erzeugt die Meßgerät-Elektronik

  -- einen mit dem Erregerstrom korrespondierenden und die im Fluid wirkenden Reibungskräfte repräsentierenden ersten internen Zwischenwert und
  -- einen Inhomogenitäten im Fluid repräsentierenden zweiten internen Zwischenwert und ermittelt

die Meßgerät-Elektronik den Viskositäts-Meßwert unter Verwendung des ersten und des zweiten internen Zwischenwerts.

Nach einer ersten Weiterbildung oder dritten Ausgestaltung des Viskositäts-Meßgeräts der Erfindung ermittelt die Meßgerät-Elektronik den zweiten internen Zwischenwert anhand des Erregerstroms.

Nach einer zweiten Weiterbildung der dritten Ausgestaltung des Viskositäts-Meßgeräts der Erfindung umfaßt die Meßgerät-Elektronik einen flüchtigen Datenspeicher, in dem ein Sampling erster interner Zwischenwerte vorgehalten ist und erzeugt die Meßgerät-Elektronik den zweiten internen Zwischenwert mittels des Samplings.

Insbesonder kann hierbei zum Erzeugen des zweiten internen Zwischenwerts eine mittels des Samplings geschätzte Standardabweichung des ersten internen Zwischenwerts dienen.

Weitere vorteilhafte Ausgestaltung ergeben sich im übrigen auch aus den Unteransprüchen.

Die Erfindung beruht insb. auf der Erkenntnis, daß die in den Meßaufnehmer zur Aufrechterhaltung der Vibrationen des Meßrohrs eingespeiste Erregerleistung und somit auch der davon abgeleitete Viskositäts-Meßwert in einem überproportional hohen Maße von Inhomogenitäten im Fluid, wie z.B. eingeperlten Gasblasen oder mitgeführten Feststoffpartikeln etc., beeinflußt werden kann. Ferner liegt der Erfindung auch auf die Erkenntnis zugrunde, daß die Erregerleistung auf sehr einfache Weise auch anhand von intern in der Meßgerät-Elektronik erzeugten Einstellsignalen oder Einstellwerten sehr präzise erfaßt werden kann und daß sowohl die Einstellsignale für die Erregerleistung als auch die tatsächlich eingespeiste die Erregerleistung, insb. auch bei Meßrohrschwingungen mit einer konstant geregelten Schwingungsamplitude, für sich allein genommen zu ungenau für eine robuste Viskositätsmessung ist.

Ein Grundgedanke der Erfindung besteht darin, abgeleitet von der Erregerleistung, insb. auch von der Art des Fluids unabhängig, einen internen Meßwert zu ermitteln, der die für die Viskositäts-Messung relevanten Inhomogenitäten im Fluid repräsentiert und der ein Maß für deren Einfluß auf den Viskositäts-Meßwert ist.

Ein weiterer Grundgedanke der Erfindung besteht ferner darin, den Viskositäts-Meßwert anhand von in der Meßgerät-Elektronik intern erzeugten Einstellsignalen oder Einstellwerten für die Erregerleistung und anhand der Vibrationen des Meßrohrs zu ermitteln, die von der tatsächlich eingespeisten Erregerleistung aufrechterhalten werden. Diese praktisch indirekte Erfassung der Erregerleistung hat den Vorteil, daß auf eine zusätzliche Messung der eingespeisten Erregerleistung zum Zwecke der Ermittlung des Viskositäts-Meßwerts verzichtet werden kann.

Ein weiterer Vorteil des Erfindung besteht daher auch darin, daß sie z.B. auch in marktüblichen Coriolis-Massedurchfluß/Dichtemeßgeräte und praktisch auch unabhängig von der konkreten Form und Anzahl der im jeweiligen Meßaufnehmer verwendeten Meßrohre, also auch ohne grundsätzliche Änderung des mechanischen Aufbaus des Meßaufnehmers, implementiert werden kann.

Die Erfindung und weitere Vorteile werden nachfolgend anhand von Ausführungsbeispielen näher erläutert, die in den Figuren der Zeichnung dargestellt sind; gleiche Teile sind in den Figuren mit gleichen Bezugszeichen versehen. Falls es der Übersichtlichkeit dienlich ist, wird auf die Angabe bereits vergebener Bezugszeichen in nachfolgenden Figuren verzichtet.

Fig. 1    zeigt ein der Erzeugung eines Viskositäts-Meßwerts dienendes Viskositäts-Meßgerät perspektivisch in einer Seitenansicht,

Fig. 2    zeigt schematisch nach der Art eines Blockschaltbildes eine bevorzugte Ausgestaltung einer für das Viskositäts-Meßgerät von Fig. 1 geeigneten Meßgerät-Elektronik,

Fig. 3    zeigt teilweise geschnitten ein Ausführungsbeispiel eines für das Viskositäts-Meßgerät von Fig. 1 geeigneten Meßaufnehmers vom Vibrations-Typ perspektivisch in einer ersten Seitenansicht,

Fig. 4    zeigt den Meßaufnehmer von Fig. 3 perspektivisch in einer zweiten Seitenansicht,

Fig. 5    zeigt ein Ausführungsbeispiel einer elektro-mechanischen Erregeranordnung für den Meßaufnehmer von Fig. 3 und

Fig. 6    symbolisiert anhand eines Diagramms für die Ermittlung des Viskositäts-Meßwerts in der Meßgerät-Elektronik implementierte Verfahrensschritte.

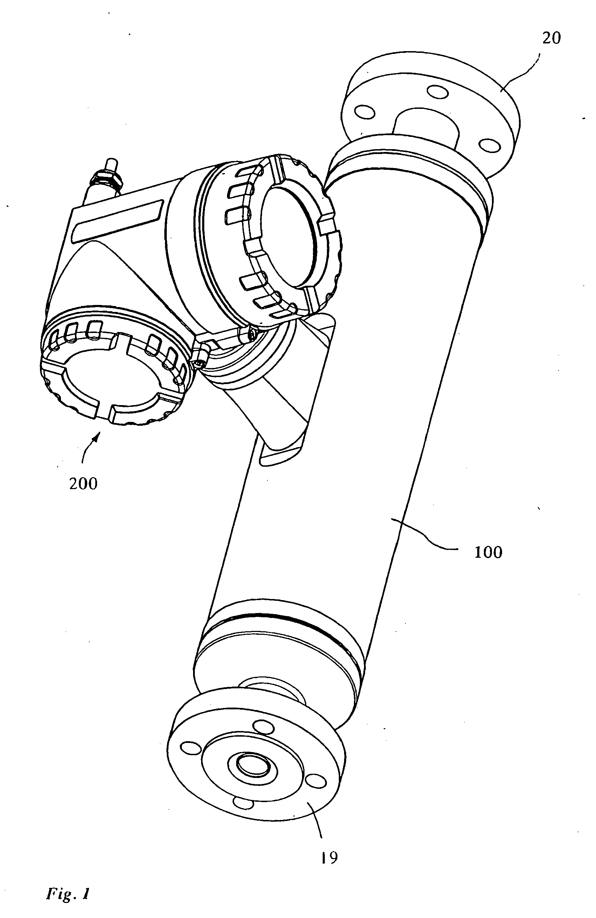

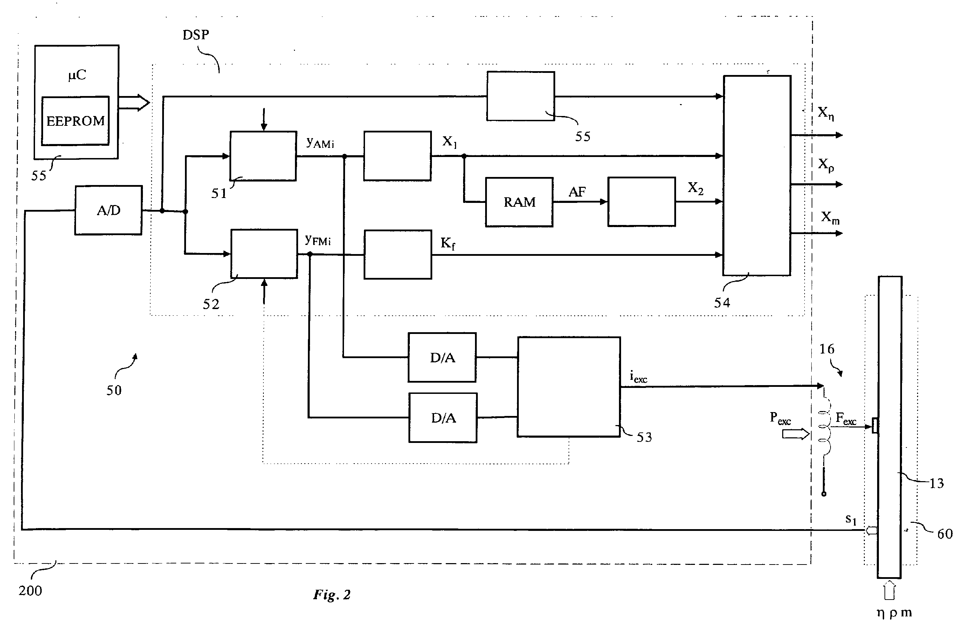

In der Fig. 1 ist ein Viskositäts-Meßgerät mit einem, bevorzugt in einem Wandlergehäuse 100 untergebrachten, Meßaufnehmer 10 vom Vibrationstyp sowie einer in einem Elektronikgehäuse 200 untergebrachten und, wie in Fig. 2 gezeigt, mit dem Meßaufnehmer 10 elektrisch verbundenen Meßgerät-Elektronik 50 schematisch dargestellt. Das Viskositäts-Meßgerät dient insb. dazu, eine Viskosität, $\eta$, eines in einer, hier nicht gezeigten, Rohrleitung strömenden Fluids zu erfassen und in einen diese Viskosität, $\eta$, momentan repräsentierenden Viskositäts-Meßwert $X_\eta$ abzubilden. Zu diesem Zweck werden im Betrieb mittels des von der Meßgerät-Elektronik 50 angetriebenen Meßaufnehmers 10 im hindurchströmenden Fluid solche Reibungskräfte erzeugt, die von der Viskosität, $\eta$, abhängig sind und die meßbar, also sensorisch erfaßbar und elektronisch auswertbar, auf den Meßaufnehmer 10 zurückwirken.

Für den bevorzugten Fall, daß das Vibrations-Meßgerät für eine Ankopplung an einen Feldbus vorgesehen ist, weist die, insb. programmierbare, Meßgerät-Elektronik 50 eine entsprechende Kommunikations-Schnittstelle für eine Datenkommunikation auf, z.B. zum Senden der Meßdaten an eine übergeordnete speicherprogrammierbare Steuerung oder ein übergeordnetes Prozeßleitsystem, auf.

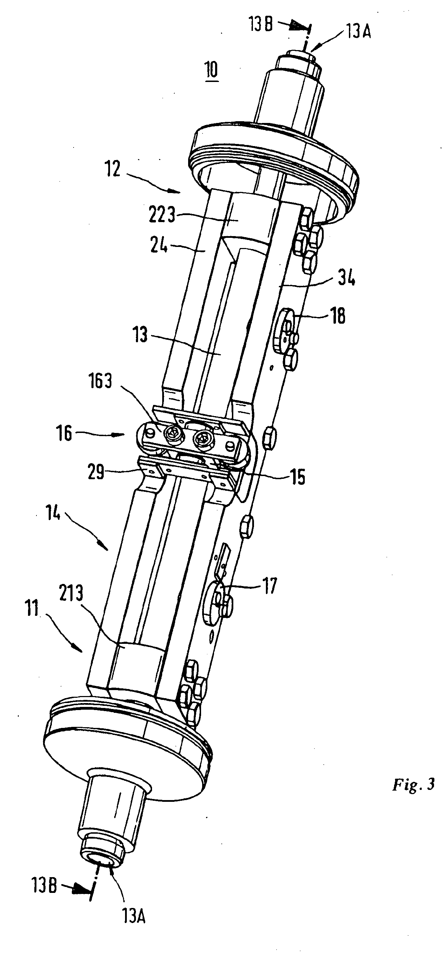

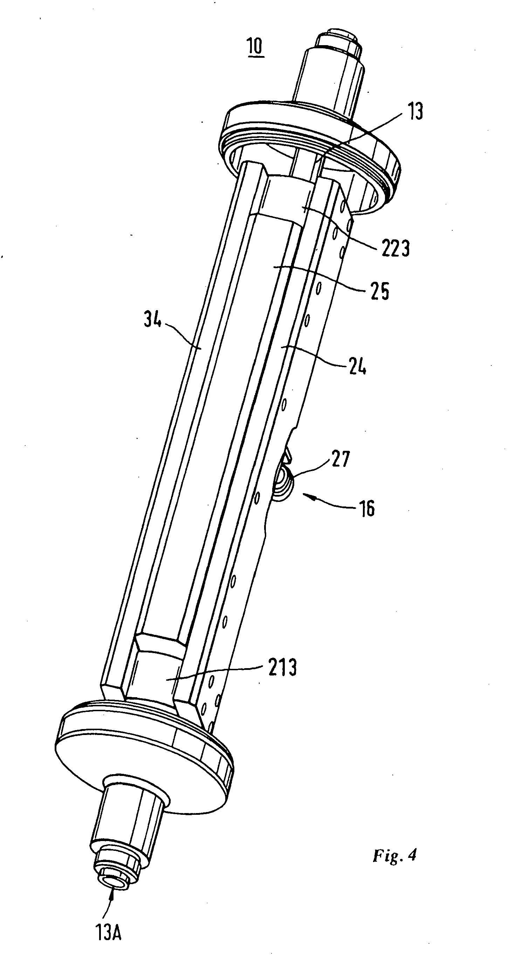

In den Fig. 3 und 4 ist ein Ausführungsbeispiel einer als ein Meßaufnehmer 10 dienenden physikalisch-elektrischen Wandleranordnung vom Vibrations-Typ gezeigt. Der Aufbau einer derartigen Wandleranordnung ist z.B. in der US-A 60 06 609 ausführlich beschrieben. Ferner werden derartige Meßaufnehmer bereits in marktüblichen Coriolis-Massedurchfluß/Dichtemeßgeräten verwendet, wie sie z.B. auch von der Anmelderin selbst mit der Serie "PROMASS I" angeboten werden.

Zum Führen des zu messenden Fluids umfaßt der Meßaufnehmer 10 wenigstens ein ein Einlaßende 11 und ein Auslaßende 12 aufweisendes Meßrohr 13 von vorgebbarem, elastisch verformbaren Meßrohrlumen 13A und von vorgebbarer Nennweite. Elastisches Verformen des Meßrohrlumens 13A bedeutet hier, daß zum Erzeugen von fluidinternen und somit das Fluid beschreibenden Reaktionskräften, nämlich von Scher- oder auch Reibungskräften, aber auch von Corioliskräften und/oder Masseträgheitskräften, im Betrieb des Meßaufnehmers 10 eine Raumform und/oder eine Raumlage des Meßrohrlumens 13A innerhalb eines Elastizitätsbereiches des Meßrohrs 13 in vorgebbarer Weise zyklisch, insb. periodisch, verändert wird, vgl. z.B. die US-A 48 01 897, die US-A 56 48 616, die US-A 57 96 011 und/oder die US-A 60 06 609.

Es sei an dieser Stelle ausdrücklich darauf verwiesen, daß zur Realisierung der Erfindung anstelle eines Meßaufnehmers gemäß dem Ausführungsbeispiel von Fig. 3 und 4 praktisch jeder der dem Fachmann bereits für Coriolis-Massedurchfluß/Dichtemeßgeräte bekannten Meßaufnehmer, insb. auch ein solcher vom Biegeschwingungstyp mit ausschließlich oder zumindest anteilig in einem Biegeschwingungsmode vibrierendem, gebogenem oder geradem Meßrohr, verwendet werden kann. Weitere geeignete Ausführungsformen für solche als Meßaufnehmer 10 dienende Wandleranordnungen sind z.B. in der US-A 53 01 557, der US-A 53 57 811, der US-A 55 57 973, der US-A 56 02 345, der US-A 56 48 616 oder in der US-A 57 96 011 ausführlich beschrieben, deren Offenbarung als zur Offenbarung dieser Anmeldung zugehörig erachtet wird.

Als Material für das, hier im wesentlichen gerade, Meßrohr 13 sind z.B. Titanlegierungen besonders geeignet. Anstelle von Titanlegierungen können aber auch andere für derartige, insb. auch für gebogene, Meßrohre üblicherweise verwendete Materialien wie z.B. rostfreier Stahl oder Zirconium etc. verwendet werden.

Das Meßrohr 13, welches in der üblichen Weise einlaßseitig und auslaßseitig mit der das Fluid zu- bzw. abführende Rohrleitung kommuniziert, ist in einen starren, insb. biege- und verwindungssteifen, und bevorzugt von einem Wandlergehäuse 100 umhüllten Tragrahmen 14 schwingfähig eingespannt.

Der Tragrahmen 14 ist am Meßrohr 13 einlaßseitig mittels einer Einlaßplatte 213 und außlaßseitig mittels einer Auslaßplatte 223 fixiert, wobei letztere beiden jeweils von entsprechenden Verlängerungsstücken des Meßrohrs 13 durchstoßen sind. Des weiteren weist der Tragrahmen 14 eine erste Seitenplatte 24 und eine zweite Seitenplatte 34 auf, welche beiden Seitenplatten 24, 34 derart an der Einlaßplatte 213 und an der Auslaßplatte 223 fixiert sind, daß sie im wesentlichen parallel zum Meßrohr 13 sowie von diesem und voneinander beabstandet angeordnet sind, vgl. Fig. 3. Somit sind einander zugewandte Seitenflächen der beiden Seitenplatten 24, 34 ebenfalls parallel zueinander.

In vorteilhafter Weise ist ein Längsstab 25 an den Seitenplatten 24, 34 vom Meßrohr 13 beabstandet fixiert, der als Schwingungen des Meßrohrs 13 tilgende Auswuchtmasse dient. Der Längstab 25 erstreckt sich, wie in Fig. 4 dargestellt, praktisch parallel zur gesamten schwingfähigen Länge des Meßrohrs 13; dies ist jedoch nicht zwingend, der Längstab 25 kann selbstverständlich, falls erforderlich, auch kürzer ausgeführt sein.

Der Tragrahmen 14 mit den beiden Seitenplatten 24, 34, der Einlaßplatte 213, der Auslaßplatte 223 und ggf. dem Längsstab 25 hat somit eine Längsschwerelinie, die im wesentlichen parallel zu einer das Einlaßende 11 und das Auslaßende 12 virtuell verbindenden Meßrohrmittelachse 13B verläuft.

In den Fig. 3 und 4 ist durch die Köpfe der gezeichneten Schrauben angedeutet, dass das erwähnte Fixieren der Seitenplatten 24, 34 an der Einlaßplatte 213, an der Auslaßplatte 223 und am Längsstab 25 durch Verschrauben erfolgen kann; es können aber auch andere geeignete und dem Fachmann geläufige Befestigungsarten angewendet werden.

Für den Fall, daß der Meßaufnehmer 10 lösbar mit der Rohrleitung zu montieren ist, ist dem Meßrohr 13 bevorzugt einlaßseitig ein erster Flansch 19 und auslaßseitig ein zweiter Flansch 20 angeformt, vgl. Fig. 1; anstelle der Flansche 19, 20 können aber z.B. auch sogenannte, wie in Fig. 3 angedeutet, Triclamp-Anschlüsse zur lösbaren Verbindung mit der Rohrleitung dienen. Falls erforderlich kann das Meßrohr 13 aber auch direkt mit der Rohrleitung, z.B. mittels Schweißen oder Hartlötung etc.

Zum Erzeugen oben genannter Reibungskräfte wird das Meßrohr 13 im Betrieb des Meßaufnehmers 10, angetrieben von einer mit dem Meßrohr gekoppelten elektro-mechanischen Erregeranordnung 16, bei einer vorgebbaren Schwingfrequenz, insb. einer auch von einer Dichte, $\rho$, des Fluids abhängigen natürlichen Resonanzfrequenz, im sogenannten Nutzmode vibrieren gelassen und somit in vorgebbarer Weise elastisch verformt.

Im gezeigten Ausführungsbeispiel wird das vibrierende Meßrohr 13, wie bei solchen Wandleranordnungen vom Biegeschwingungs-Typ üblich, aus einer statischen Ruhelage räumlich, insb. lateral, ausgelenkt; gleiches gilt praktisch auch für solche Wandleranordnungen, bei denen ein oder mehrere gebogene Meßrohre im Betrieb bekanntlich Auslegerschwingungen um eine entsprechende, das jeweilige Einlaß- und Auslaßende virtuell verbindende Längsachse oder auch für solche, bei denen ein oder mehere gerade Meßrohre lediglich ebene Biegeschwingungen um ihre Meßrohrlängsachse ausführen. Für den anderen Fall, daß als Meßaufnehmer 10, wie z.B. in der WO-A 95/16 897 beschrieben, eine Wandleranordnung vom Radialschwingungs-Typ dient und das vibrierende Meßrohr in der dafür üblichen Weise symmetrisch verformt wird, würde letzteres im wesentlichen in seiner statischen Ruhelage belassen.

Die Erregeranordnung 16 dient dazu, unter Umsetzung einer von der Meßgerät-Elektronik 50 eingespeisten, elektrischen Erregerleistung $P_{exc}$ eine auf das Meßrohr 13 einwirkende Erregerkraft $F_{exc}$ zu erzeugen. Die Erregerleistung $P_{exc}$ dient praktisch lediglich zur Kompensation des über mechanische und fluidinterne Reibung dem Schwingungssystem entzogenen Leistungsanteils. Zur Erzielung eines möglichst hohen Wirkungsgrades ist die Erregerleistung $P_{exc}$ bevorzugt möglichst genau so eingestellt, daß im wesentlichen die Schwingungen des Meßrohrs 13 im Nutzmode, z.B. die mit einer niedrigsten Resonanzfrequenz, aufrecht erhalten werden.

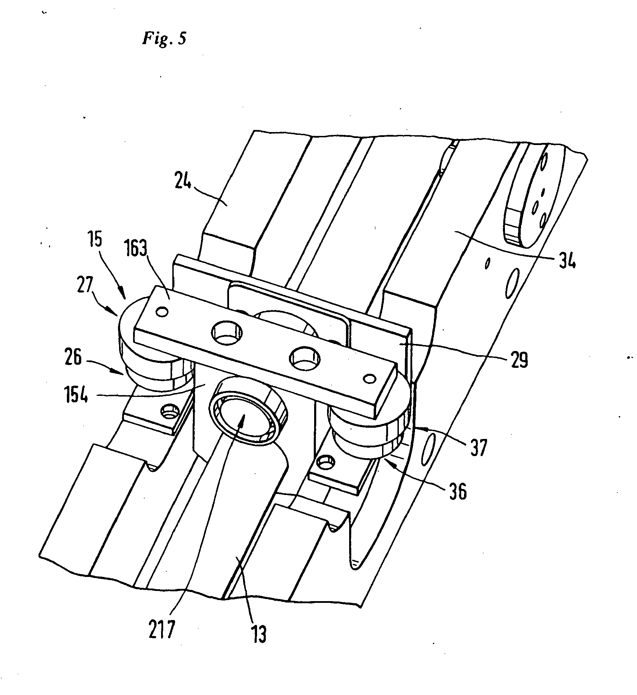

Zum Zwecke des Übertragens der Erregerkraft $F_{exc}$ auf das Meßrohr 13 weist die Erregeranordnung 16, wie in Fig. 5 dargestellt, eine starre, elektromagnetisch und/oder elektrodynamisch angetriebene Hebelanordnung 15 mit einem am Meßrohr 13 biegefest fixierten Ausleger 154 und mit einem Joch 163 auf. Das Joch 163 ist an einem vom Meßrohr 13 beabstandeten Ende des Auslegers 154 ebenfalls biegefest fixiert, und zwar so, daß es oberhalb des Meßrohrs 13 und quer zu ihm angeordnet ist. Als Ausleger 154 kann z.B. eine metallische Scheibe dienen, die das Meßrohr 13 in einer Bohrung aufnimmt. Für weitere geeignete Ausführungen der Hebelanordnung 15 sei an dieser Stelle auf die bereits erwähnte US-A 60 06 609 verwiesen. Die, hier T-förmige, Hebelanordnung 15 ist bevorzugt, wie in Fig. 3 ohne weiteres erkennbar ist, so angeordnet, daß sie etwa in der Mitte zwischen Einlaß- und Auslaßende 11, 12 auf das Meßrohr 13 einwirkt, wodurch dieses im Betrieb mittig seine größte laterale Auslenkung ausführt.

Zum Antreiben der Hebelanordnung 15 umfaßt die Erregeranordnung 16 gemäß Fig. 5 eine erste Erregerspule 26 und einen zugehörigen ersten dauermagnetischen Anker 27 sowie eine zweite Erregerspule 36 und einen zugehörigen zweiten dauermagnetischen Anker 37. Die beiden, elektrisch bevorzugt in Reihe geschalteten, Erregerspulen 26, 36 sind beiderseits des Meßrohrs 13 unterhalb des Jochs 163 am Tragrahmen 14, insb. lösbar, so fixiert, daß sie mit ihrem jeweils zugehörigen Anker 27 bzw. 37 im Betrieb in Wechselwirkung stehen; im übrigen können die beiden Erregerspulen 26, 36, falls erforderlich, selbstverständlich auch zueinander parallel geschaltet sein.

Wie in Fig. 3 und 5 dargestellt, sind die beiden Anker 27, 37 derart voneinander beabstandet am Joch 163 fixiert, daß im Betrieb des Meßaufnehmers 10 der Anker 27 im wesentlichen von einem Magnetfeld der Erregerspule 26 und der Anker 37 im wesentlichen von einem Magnetfeld der Erregerspule 36 durchsetzt und aufgrund entsprechender elektrodynamischer und/oder elektromagnetischer Kraftwirkungen bewegt wird.

Die mittels der Magnetfelder der Erregerspulen 26, 36 erzeugten Bewegungen der Anker 27, 37 werden via Joch 163 und Ausleger 154 auf das Meßrohr 13 übertragen. Diese Bewegungen der Anker 27, 37 sind so ausgebildet, daß das Joch 163 alternierend in Richtung der Seitenplatte 24 oder in Richtung der Seitenplatte 34 aus seiner Ruhelage ausgelenkt wird. Eine entsprechende, zur bereits erwähnten Meßrohrmittelachse 13B parallele Drehachse der Hebelanordnung 15 kann z.B. durch den Ausleger 154 verlaufen.

Insbesondere zum Haltern der Erregerspulen 26, 36 und ggf. einzelner Komponenten einer weiter unten genannten Magnetbremsanordnung 217 umfaßt der Tragrahmen 14 ferner bevorzugt eine mit den Seitenplatten 24, 34, insb. lösbar, verbundene Halterung 29 für die elektromechanische Erregeranordnung 16.

Beim Meßaufnehmer 10 des Ausführungsbeispiels bewirken die lateralen Auslenkungen des am Einlaßende 11 und am Auslaßende 12 fest eingespannten, vibrierenden Meßrohrs 13 gleichzeitig eine elastische Verformung seines Meßrohrlumens 13A, die praktisch über die gesamte Länge des Meßrohrs 13 ausgebildet ist.

Ferner wird beim Meßwertaufnehmer des Ausführungsbeispiels im Meßrohr 13 aufgrund eines via Hebelanordnung 15 auf dieses wirkenden Drehmoments gleichzeitig zu den lateralen Auslenkungen zumindest abschnittsweise eine torsionale Verdrehung um die Meßrohrmittelachse 13B erzwungen, so daß dieses praktisch in einem als Nutzmode dienenden gemischten Biegeschwingungs-Torsionsmode schwingt. Die Verdrehung des Meßrohrs 13 kann dabei so ausgebildet sein, daß eine laterale Auslenkung des vom Meßrohr 13 beabstandeten Ende des Auslegers 154 entweder gleich oder entgegen gerichtet zur lateralen Auslenkung des Meßrohrs 13 ist. Anders gesagt, das Meßrohr 13 kann Torsionsschwingungen in einem dem ersteren Fall entsprechenden ersten Biegeschwingungs-Torsionsmode oder in einem dem letzteren Fall entsprechenden zweiten Biegeschwingungs-Torsionsmode ausführen, wobei beim Meßaufnehmer 10 gemäß dem Ausführungsbeispiel die natürliche Resonanzfrequenz des zweiten Biegeschwingungs-Torsionsmodes von z.B. 900 Hz annährend doppelt so hoch ist wie die des ersten Biegeschwingungs-Torsionsmodes.

Für den bevorzugten Fall, daß das Meßrohr 13 betriebsmäßig Schwingungen lediglich im zweiten Biegeschwingungs-Torsionsmode ausführen soll, ist in vorteilhafter Weise eine auf dem Wirbelstromprinzip beruhende Magnetbremsanordnung 217 in die Erregeranordnung 16 integriert, die dazu dient, die Lage dieser Drehachse zu stabilisieren. Mittels der Magnetbremsanordnung 217 kann somit sichergestellt werden, daß das Meßrohr 13 stets im zweiten Biegeschwingungs-Torsionsmode schwingt und somit allfällige äußere Störeinflüsse auf das Meßrohr 13 nicht zu einem spontanen Wechsel in einen anderen, insb. auch nicht in den ersten, Biegeschwingungs-Torsionsmode führen. Einzelheiten einer solchen Magnetbremsanordnung sind z.B. in der US-A 60 06 609 ausführlich beschrieben; ferner ist die Verwendung von derartigen Magnetbremsanordnungen bereits von Meßaufnehmern der erwähnten Serie "PROMASS I" bekannt.

Es sei an dieser Stelle noch erwähnt, daß bei dem auf diese Weise gemäß dem zweiten Biegeschwingungs-Torsionsmode ausgelenkten Meßrohr 13 die gedachte Meßrohrmittelachse 13B praktisch leicht deformiert wird und somit bei den Schwingungen keine Ebene sondern eine schwach gewölbte Fläche aufspannt. Ferner weist eine in dieser Fläche liegende, durch den Mittelpunkt der Meßrohrmittelachse beschriebene Bahnkurve die kleinste Krümmung aller durch die Meßrohrmittelachse beschriebenen Bahnkurven auf.

Zum Detektieren der Verformungen des Meßrohrs 13 umfaßt der Meßaufnehmer 10 ferner eine Sensoranordnung 60, die mittels wenigstens eines auf Vibrationen des Meßrohrs 13 reagierenden ersten Sensors 17 ein diese repräsentierendes erstes, insb. analoges, Sensorsignal $s_1$ erzeugt. Der Sensor 17 kann z.B., wie bei derartigen Meßaufnehmern üblich, mittels eines am Meßrohr 13 fixierten und mit einer vom Tragrahmen 14 gehalterten Sensorspule in Wechselwirkung stehenden dauermagnetischen Ankers gebildet sein.

Als Sensor 17 sind besonders solche geeignet, die basierend auf dem elektrodynamischen Prinzip, eine Geschwindigkeit der Auslenkungen des Meßrohrs erfassen. Es können aber z.B. auch beschleunigungsmessende elektrodynamische oder aber auch wegmessende resistive oder optische Sensoren verwendet werden. Selbstverständlich können aber auch andere dem Fachmann bekannte und für die Detektion solcher Vibrationen geeignete Sensoren verwendet werden.

Nach einer bevorzugten Ausgestaltung der Erfindung umfaßt die Sensoranordnung 60 ferner einen, insb. zum ersten Sensor 17 identischen, zweiten Sensor 18, mittels dem sie ein ebenfalls Vibrationen des Meßrohrs repräsentierdendes zweites Sensorsignal $s_1$ liefert. Die beiden Sensoren 17, 18 sind bei dieser Ausgestaltung entlang des Meßrohrs 13 voneinander beabstandet, insb. auch in einem gleichen Abstand von der Mitte des Meßrohrs 13, so im Meßaufnehmer 10 angeordnet, daß mittels der Sensoranordnung 60 sowohl einlaßseitige als auch auslaßseitige Vibrationen des Meßrohrs 13 örtlich erfaßt und in die entsprechenden Sensorsignale $s_1$ bzw. $s_2$ abgebildet werden.

Das erste und ggf. das zweite Sensorsignal $s_1$ bzw. $s_2$, die üblicherweise jeweils eine der momentanen Schwingfrequenz des Meßrohrs 13 entsprechende Signalfrequenz aufweisen, sind, wie in Fig. 2 gezeigt, der Meßgerät-Elektronik 50 zugeführt.

Zum Vibrierenlassen des Meßrohrs 13 wird die Erregeranordnung 16 mittels eines von der Meßgerät-Elektronik 50 gelieferten, gleichfalls oszillierenden, unipolaren oder bi-polaren, Erregerstroms $i_{exc}$ von einstellbarer Amplitude und von einstellbarer Erregerfrequenz $f_{exc}$ derart gespeist, daß die Erregerspulen 26, 36 im Betrieb von diesem durchflossen sind und in entsprechender Weise die zum Bewegen der Anker 27, 37 erforderlichen Magnetfelder erzeugt werden. Somit kann die für das Vibrierenlassen des Meßrohrs 13 erforderliche Erregerkraft $F_{exc}$ in der dem Fachmann bekannten Weise, z.B. mittels einer Strom-und/oder Spannungs-Regelschaltung, hinsichtlich ihrer Amplitude und z.B. mittels einer Phasen-Regelschleife hinsichtlich ihrer Frequenz, überwacht und eingestellt werden. Der von der Meßgerät-Elektronik 50 gelieferte Erregerstrom $i_{exc}$ ist bevorzugt sinusförmig ausgebildet; er kann aber z.B. auch ein pulsierender, ein dreieckförmiger oder ein rechteckförmiger Wechselstrom sein.

Die Erregerfrequenz $f_{exc}$ des Erregerstroms $i_{exc}$ entspricht, wie bei Vibrations-Meßgeräten der beschriebenen Art üblich, der vorgegebenen Schwingfrequenz des Meßrohrs 13 und ist daher bevorzugt auf eine momentane natürliche Resonanzfrequenz des fluidführenden Meßrohrs 13 eingestellt. Wie bereits angedeutet, wird für den Meßaufnehmer 10 gemäß dem Ausführungsbeispiel vorgeschlagen, den Erregerstrom $i_{exc}$ durch die beiden Erregerspulen 26, 36 so fließen zu lassen und dessen Erregerfrequenz $f_{exc}$ so zu wählen, daß das lateral schwingende Meßrohr 13 möglichst ausschließlich gemäß dem zweiten Biegeschwingungs-Torsionsmode torsional verdreht wird.

Zum Erzeugen und Einstellen des Erregerstroms $i_{exc}$ umfaßt die Meßgerät-Elektronik 50 eine entsprechende Treiberschaltung 53, die von einem die einzustellende Erregerfrequenz $f_{exc}$ repräsentierenden Frequenzstellsignal $y_{FM}$ und von einem die einzustellende Amplitude des Erregerstroms $i_{exc}$ repräsentierenden Amplitudenstellsignal $y_{AM}$ gesteuert ist. Die Treiberschaltung kann z.B. mittels eines spannungsgesteuerten Oszillators und eines nachgeschalteten Spannungs-zu-Stromwandler realisiert sein; anstelle eines analogen Oszillators kann aber z.B. auch ein numerisch gesteuerter digitaler Oszillator zum Einstellen des Erregerstroms $i_{exc}$ verwendet werden.

Zum Erzeugen des Amplitudenstellsignals $y_{AM}$ kann z.B. eine in die Meßgerät-Elektronik 50 integrierte Amplitudenregelschaltung 51 dienen, die anhand der momentanen Amplitude wenigstens eines der beiden Sensorsignale $s_1$, $s_2$ sowie anhand eines entsprechenden konstanten oder variablen Amplitudenreferenzwerts $W_1$ das Amplitudenstellsignal $y_{AM}$ aktualisiert; ggf. kann auch eine momentane Amplitude des Erregerstroms $i_{exc}$ zur Generierung des Amplitudenstellsignals $y_{AM}$ hinzugezogen werden. Derartige Amplitudenregelschaltungen sind dem Fachmann ebenfalls bekannt. Als ein Beispiel für eine solche Amplitudenregelschaltung sei nochmals auf Coriolis-Massedurchflußmesser der Serie "PROMASS I" verwiesen. Deren Amplitudenregelschaltung ist bevorzugt so ausgeführt, daß die lateralen Schwingungen des Meßrohrs 13 auf eine konstante, also auch von der Dichte, $\rho$, unabhängige, Amplitude geregelt werden.

Des weiteren kann das Frequenzstellsignal $y_{FM}$ von einer entsprechenden Frequenzregelschaltung 52 geliefert werden, die dieses z.B. anhand wenigstens des Sensorsignals $s_1$ sowie anhand einer als ein entsprechender Frequenzreferenzwert $W_2$ dienenden, frequenz-repräsentativen Gleichspannung aktualisiert.

Bevorzugt ist die Frequenzregelschaltung 52 und die Treiberschaltung 53 zu einer Phasen-Regelschleife zusammengeschaltet, die in der dem Fachmann bekannten Weise dazu verwendet wird, anhand einer Phasendifferenz, gemessen zwischen wenigstens einem der Sensorsignale $s_1$, $s_2$ und dem einzustellenden bzw. dem gemessenen Erregerstrom $i_{exc}$, das Frequenzstellsignal $y_{FM}$ ständig auf eine momentane Resonanzfrequenz des Meßrohrs 13 abzugleichen. Der Aufbau und die Verwendung solcher Phasenregel-Schleifen zum Betreiben von Meßrohren auf einer ihrer mechanischen Resonanzfrequenzen ist z.B. in der US-A 48 01 897 ausführlich beschrieben. Selbstverständlich können auch andere, dem Fachmann bekannte Frequenzregelschaltungen verwendet werden, wie z.B. auch in der US-A 45 24 610 oder der US-A 48 01 897 beschrieben sind. Ferner sei hinsichtlich einer Verwendung solcher Frequenzregelschaltungen für Meßaufnehmer der beschriebenen Art auf die bereits erwähnte Serie "PROMASS I" verwiesen.

Nach einer weiteren bevorzugten Ausgestaltung der Erfindung sind die Amplitudenregelschaltung 51 und die Frequenzregelschaltung 52 mittels eines in der Meßgerät-Elektronik 50 vorgesehenen digitalen Signalprozessors DSP und mittels in diesen entsprechend implementierter und darin ablaufender Programm-Codes realisiert. Die Programm-Codes können z.B. in einem nichtflüchtigen Speicher EEPROM eines den Signalprozessor steuernden und/oder überwachenden Mikrocomputers 55 persistent oder aber auch permanent gespeichert sein und beim Starten des Signalprozessors DSP in einen, z.B. im Signalprozessors DSP integrierten, flüchtigen Datenspeicher RAM der Meßgerät-Elektronik 50 geladen werden. Für derartige Anwendungen geeignete Signalprozessoren sind z.B. solche vom Typ TMS320VC33, wie sie von der Firma Texas Instruments Inc. am Markt angeboten werden.

Es versteht sich praktisch von selbst, daß zumindest das Sensorsignal $s_1$ und ggf. auch das Sensorsignal $s_2$ für eine Verarbeitung im Signalprozessor DSP mittels entsprechender Analog-zu-digital-Wandler A/D in entsprechende Digitalsignale umzuwandeln sind, vgl. hierzu insb. die EP-A 866 319. Falls erforderlich, sind vom Signalprozessor ausgegebene Stellsignale, wie z.B. das Amplitudenstellsignal $y_{AM}$ oder das Frequenzstellsignal $y_{FM}$, ggf. in entsprechender Weise digital-zu-analog zu wandeln.

Da wie bereits mehrfach angedeutet, mittels derartiger Wandleranordnungen vom Vibrationstyp neben fluidinternen Reibungskräften z.B. auch massedurchflußabhängige Corioliskräfte und fluiddichteabhängige Massenträgheitskräfte induziert werden, dient das Viskositäts-Meßgerät nach einer bevorzugten Weiterbildung ferner auch dazu, neben der Viskosität, $\eta$, eine Dichte, $\rho$, sowie einen Massedurchfluß, $\dot{m}$, des Fluids, insb. simultan, zu ermitteln und in entsprechender Weise in einen die Dichte repräsentierenden Dichte-Meßwert $X_\rho$ und in einen den Massendurchfluß repräsentierenden Massedurchfluß-Meßwert $X_{\dot{m}}$ abzubilden. Hierbei können die in herkömmlichen Coriolis-Massedurchfluß/Dichtemeßgeräten, insb. auch in solchen der bereits erwähnten Serie "PROMASS I", zum Messen des Massendurchflusses und/oder der Dichte eingesetzten und dem Fachmann an und für sich bekannten Verfahren verwendet werden, vgl. hierzu auch die US-A 41 87 721, die US-A 48 76 879, die US-A 56 48 616, die US-A 56 87 100, die US-A 57 96 011 oder die US-A 60 73 495.

Zum Erzeugen des Viskositäts-Meßwerts $X_\eta$ wird mittels der Meßgerät-Elektronik 50 von der in die Erregeranordnung 16 eingespeisten, insb. der Kompensation der in der oben beschriebenen Weise im Fluid erzeugten inneren Reibung dienenden, Erregerleistung $P_{exc}$ zunächst ein erster, insb. digitaler, Zwischenwert $X_1$ abgeleitet, der die schwingungsdämpfenden Reibungskräfte im Fluid repräsentiert; neben oder anstelle der tatsächlich eingespeisten Erregerleistung $P_{exc}$ kann ferner auch eine mittels der Meßgerät-Elektronik 50 vorgegebene, z.B. durch das an die Treiberschaltung Amplitudenstellsignal $y_{AM}$ und/oder das Frequenzstellsignal $y_{FM}$ repräsentierte, Erregerleistung zur Ermittlung des Viskositäts-Meßwerts $X_\eta$, insb. aber auch zur Ermittlung des Zwischenwerts $X_1$, dienen.

Nach einer bevorzugten Ausgestaltung der Erfindung wird der Zwischenwert $X_1$ anhand des seitens der Meßgerät-Elektronik 50 vorgegebenen und/oder anhand des tatsächlich eingespeisten, gemessenen Erregerstroms $i_{exc}$, insb. anhand von dessen Amplitude oder anhand eines gleitenden Erregerstrom-Mittelwerts, ermittelt. Der Erregerstrom $i_{exc}$ dient dabei praktisch als ein Maß für die Gesamtheit der den Auslenkungsbewegungen des vibrierenden Meßrohrs 13 entgegenwirkenden Dämpfungskräfte. Bei der Verwendung des Erregerstroms $i_{exc}$ zur Bestimmung des Zwischenwerts $X_1$ ist jedoch zu berücksichtigen, daß vorgenannte Dämpfungskräfte einerseits zwar auch von den viskositätsabhängigen Reibungen innerhalb des Fluids, andererseits aber z.B. auch von mechanischen Reibungen in der Erregeranordnung 16 und im vibrierenden Meßrohr abhängig sind.

Zur Separierung der Information über die Viskosität aus dem Erregerstrom $i_{exc}$ wird dieser daher für die Ermittlung des Zwischenwerts $X_1$ intern der Meßgerät-Elektronik 50 um einen von der fluid-internen Reibung praktisch unabhängigen Leerstrom, gemessen bei evakuiertem oder zumindest nicht mit Flüssigkeit befülltem Meßrohr 13, reduziert. Der üblicherweise langzeitstabile Leerstrom kann z.B. während einer Kalibrierung des Viskositäts-Meßgeräts vorab ohne weiteres ermittelt und in entsprechender Weise in der Meßgerät-Elektronik 50, z.B. im nichtflüchtigen Speicher EEPROM, inform eines digitalen Leerstromwertes abgespeichert werden.

Bevorzugt wird der Zwischenwert $X_1$ ebenfalls anhand eines oder mehrerer digitalen, z.B. die momentane Amplitude oder einen momentanen Mittelwert des Erregerstroms $i_{exc}$ repräsentierenden, Erregerstrom-Meßwerte und des digitalen Leerstromwertes mittels einer einfachen numerischen Differenzbildung gebildet. Selbstverständlich ist für den Fall, daß der Erregerstrom-Meßwert die Amplitude oder den Mittelwert des Erregerstroms $i_{exc}$ repräsentiert von diesem zum Zwecke der Erzeugung des Zwischenwerts $X_1$ ebenfalls eine Amplitude bzw. ein entsprechender Mittelwert des Leerstroms abzuziehen. Zur Erzeugung des Erregerstrom-Meßwerts kann z.B. eine einfache Strommessung ausgangs vorgenannter Treiberschaltung 53 dienen. Bevorzugt jedoch wird der Erregerstrom-Meßwert und somit auch der Zwischenwert $X_1$, wie auch in der Fig. 2 schematisch dargestellt, indirekt unter Verwendung des von der Amplitudenregelschaltung 51 gelieferten Amplitudenstellsignal $y_{AM}$ ermittelt. Dies hat nämlich auch den Vorteil, daß auf eine zusätzliche Strommessung, insb. auch auf dafür notwendige Meßschaltungen, verzichtet werden kann.

Unter Berücksichtigung des bereits in der US-A 45 24 610 beschriebenen Zusammenhangs:

$$\sqrt{\eta} \sim i_{exc}, \tag{1}$$

nachdem der Erregerstrom $i_{exc}$, zumindest bei konstanter Dichte, $\rho$, sehr gut mit der Qudratwurzel der Viskosität, $\eta$, korreliert ist, wird in entsprechender Weise für die Ermittlung des Viskositäts-Meßwerts $X_\eta$ zunächst intern der Meßgerät-

EP 1 291 639 B1

Elektronik 50 das Quadrat des vom Erregerstrom $i_{exc}$ abgeleiteten Zwischenwerts $X_1$ gebildet.

Es hat sich nunmehr gezeigt, daß für den Fall, daß der Viskositäts-Meßwert $X_\eta$ lediglich anhand des Zwischenwerts $X_1$ ermittelt wird, der Viskositäts-Meßwert $X_\eta$ trotz praktisch konstant bleibender Viskosität und Dichte für viele industrielle Anwendungen viel zu hohe Ungenauigkeiten aufweisen kann.

Nähere Untersuchungen des Phänomens unter Laborbedingungen, also mit Fluiden bekannter, insb. auch konstant gehaltener, Viskosität und Dichte, ergaben u.a., daß der Zwischenwert $X_1$ dabei nicht nur sehr empfindlich auf sich anlagernde Gasblasen, sondern vor allem auch überaus empfindlich auf Inhomogenitäten innerhalb des strömenden Fluids reagiert. Solche Inhomogenitäten können z.B. in das Fluid eingeperlte und mitströmende Luftblasen oder vom Fluid mitgeführte Feststoff-Partikel sein. Schon geringfügige Störungen der Homogenität innerhalb des strömenden Fluids können hierbei zu erheblichen Fehlern im Viskositäts-Meßwert $X_\eta$ führen, die in einer Größenordnung von bis zu einem Hundertfachen der tatsächlichen Viskosität, $\eta$, des Fluids liegen.

Unter Auswertung einer Anzahl von zeitlichen Amplitudenverläufen des Erregerstroms $i_{exc}$, die während an verschiedenen, in vorbestimmter Weise gestörten Flüssigkeiten durchgeführten Messungen aufgenommen wurden, ergab sich überraschenderweise, daß der Erregerstrom $i_{exc}$ zum einen, trotz im wesentlichen gleichbleibender Bedingungen, also z.B. bei stationär strömender Flüssigkeit mit konstanter Dichte und Viskosität und mit einem weitgehend konstant gehaltenen Anteil an mitgeführten Luftblasen, über die Zeit in erheblichem Maße schwanken kann. Zum anderen aber wurde auch festgestellt, daß der in praktisch nicht vorherbestimmbarer Weise schwankende Erregerstrom $i_{exc}$, insb. dessen Amplitude, und somit auch der Zwischenwert $X_1$ eine empirische Standardabweichung $s_{iexc}$ bzw. eine empirische Streuung aufweist, die sehr stark mit dem Grad der Inhomogenität korreliert ist.

Abgeleitet davon wird mittels der Meßgerät-Elektronik 50 erfindungsgemäß ein zweiter interner Zwischenwert $X_2$ gebildet, der, als eine Bewertung des bei der Bildung des Zwischenwerts $X_1$ zunächst nicht berücksichtigten Einflusses von Inhomogenitäten im Fluid dienend, bei der Ermittlung des Viskositäts-Meßwerts $X_\eta$ zur Wichtung des Zwischenwerts $X_1$ hinzugezogen wird.

Die Verwendung des Zwischenwerts $X_2$ basiert dabei auf der Erkenntnis, daß einerseits der Zwischenwert $X_1$ allein nur bei einem weitgehend homogenen Fluid eine hinreichend genaue Information über dessen Viskosität, $\eta$, liefern kann und daß andererseits, wie oben beschrieben, die momentan im Fluid gebildeten Inhomogenitäten anhand des zeitlichen Verlaufs des eingespeisten Erregerstroms $i_{exc}$ sehr genau und weitgehend fluidunabhängig bewertet werden können.

Nach einer bevorzugten Ausgestaltung der Erfindung wird Zwischenwert $X_1$ zur Bildung des Viskositäts-Meßwerts $X_\eta$ mittels einer einfachen numerischen Division auf den Zwischenwert $X_2$ normiert, d.h. es soll für den Viskositäts-Meßwert $X_\eta$ gelten:

$$X_\eta^{\cdot} = \frac{K_1}{X_\rho} \cdot \left(\frac{X_1}{X_2}\right)^2 \qquad (2)$$

worin

$K_1$ eine, insb. auch von der Geometrie des Meßrohrs 13 abhängige, Gerätekonstante ist.

Der in den Nenner der mit Gl. (2) beschriebenen Bildungsvorschrift gestellte Dichte-Meßwert $X_\rho$ trägt hier lediglich der Tatsache Rechnung, daß vom Stromquadrat eigentlich die Information über das Produkt aus Dichte und Viskosität geliefert wird, vgl. hierzu auch die US-A 45 24 610.

Es hat sich ferner überraschenderweise gezeigt, daß bei einer Ermittlung des Viskositäts-Meßwerts nach Gl. (2) der interne Zwischenwert $X_2$ nach folgender linearer Beziehung leicht ermittelt werden kann:

$$X_2 = K_2 \cdot s_{iexc} + K_3 \qquad (3)$$

worin

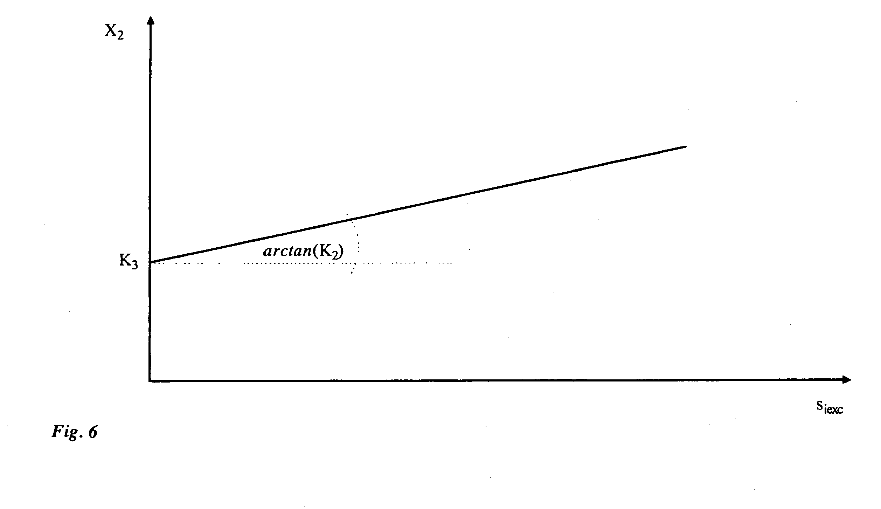

$K_2$, $K_3$ mittels Kalibriermessung ermittelte Konstanten sind, die, wie ohne weiteres ersichtlich, den Parametern Anstieg bzw. Offset einer einfachen Geradengleichung entsprechen, vgl. Fig. 6.

Zur Bestimmung der beiden Konstanten $K_2$, $K_3$, werden bei der Kalibriermessung für zwei Kalibrier-Fluid bekannter, möglichst konstant gehaltener Viskosität und in unterschiedlicher jedoch jeweils gleichbleibender Weise ausgebildeter Inhomogenität sowohl die momentane Standardabweichung für den jeweiligen Erregerstrom, insb. für dessen Amplituden, geschätzt als auch ein Verhältnis $X_\eta/\eta$ des jeweils ermittelten Viskositäts-Meßwert zur dann jeweils aktuellen Viskosität gebildet. Beispielsweise kann als erstes Kalibrier-Fluid (Index I) strömendes Wasser mit eingeperlten Luftblasen und als zweites Kalibrier-Fluid (Index II) möglichst homogenes Wasser verwendet werden.

Für den oben beschriebenen Fall, daß die Viskosität im Betrieb gemäß Gl. (2) ermittelt werden soll, können die beiden Konstanten $K_2$, $K_3$ wie folgt berechnet werden:

$$K_2 = \frac{\sqrt{\dfrac{X_{\eta,I}}{\eta_I}} - \sqrt{\dfrac{X_{\eta,II}}{\eta_{II}}}}{s_{iexc,I} - s_{iexc,II}} \tag{4}$$

$$K_3 = \sqrt{\frac{X_{\eta,I}}{\eta_I}} - K_2 \cdot s_{iexc,I}$$

Die Berechnung der jeweiligen empirischen Standardabweichung $s_{iexc}$ erfolgt bevorzugt anhand eines Samplings AF mehrerer, z.B. im flüchtigen Datenspeicher RAM digital abgelegter, Zwischenwerte $X_1$ gemäß der bekannten Funktion:

$$s_{iexc} = \sqrt{\left(\frac{1}{m-1}\sum_{j=1}^{m}\left(X_{1,j} - \frac{1}{m}\sum_{j=1}^{m}X_{1,j}\right)^2\right)} \cdot \tag{5}$$

Falls erforderlich, kann das der Ermittlung der Standardabweichung dienende Sampling AF z.B. auch eine in entsprechender Weise abgespeicherte Abtastfolge eines Amplitudenverlaufs vom Erregerstrom $i_{exc}$, also ein Abschnitt einer digitalisierten Hüllkurve des Erregerstroms $i_{exc}$ sein.

Untersuchungen haben gezeigt, daß für eine hinreichend genaue Schätzung der Standardabweichung $s_{iexc}$ Samplings von nur relativ geringer Mächtigkeit, m, z.B. von etwa 100 bis 1000 Zwischenwerten $X_1$, erforderlich sind, wobei die einzelnen Zwischenwerten $X_1$ auch nur innerhalb eines sehr schmalen Abtastfenster von etwa 1 bis 2 Sekunden abgetastet sein müssen. Dementsprechend wäre auch eine relativ niederige Abtastfrequenz in der Größenordnung von wenigen Kilohertz, z.B. etwa 1 bis 5 kHz ausreichend.

Der Zwischenwert $X_2$ kann in vorteilhafter Weise ferner z.B. auch dazu verwendet werden, den Grad der Inhomogenität des Fluids oder davon abgeleitet Meßwerte, wie z.B. einen prozentualen Luftgehalt im Fluid oder einen Volumen- Mengen- oder Massenanteil von im Fluid mitgeführten FeststoffPartikeln, z.B. vor Ort oder in einer entfernten Leitwarte visuell wahrnehmbar, zu signalisieren.

Der nach Gl. (2) ermittelte Viskositäts-Meßwert $X_\eta$ stellt eine gute Schätzung für eine dynamische Viskosität des Fluids dar, die bekanntlich auch als Produkt aus kinematischer Viskosität und Dichte, $\rho$, des Fluids gebildet werden kann. Soll der Viskositäts-Meßwert $X_\eta$ als eine Schätzung für die kinematische Viskosität dienen, so ist vor dessen Ausgabe eine entsprechende Normierung, z.B. mittels einer einfachen numerischen Division, auf den Dichte-Meßwert $X_\rho$ vorzunehmen. Zu diesem Zweck kann Gl.(2) wie folgt modifiziert werden:

$$X_\eta = K_1 \cdot \left(\frac{X_1}{X_\rho \cdot X_2}\right)^2 \tag{6}$$

Es hat sich ferner gezeigt, daß für derartige Viskositäts-Meßgeräte mit einem solchen Meßaufnehmer vom Biegeschwingungstyp, insb. auch bei konstant geregelter Schwingungsamplitude, ein Verhältnis $i_{exc}/\theta$ des Erregerstroms

$i_{exc}$ zu einer praktisch nicht direkt meßbaren Geschwindigkeit θeiner die inneren Reibungen und somit auch die Reibungskräfte im Fluid verursachenden Bewegung eine genauere Schätzung für die bereits erwähnte, den Auslenkungen des Meßrohrs 13 entgegenwirkenden Dämpfung ist. Daher ist zur weiteren Erhöhung der Genauigkeit des Viskositäts-Meßwerts $X_\eta$, insb. aber auch zur Verringerung von dessen Empfindlichkeit auf im Betrieb schwankenden Schwingungsamplituden des Meßrohrs 13, nach einer bevorzugten Ausgestaltung der Erfindung ferner vorgesehen, daß für die Ermittlung des Viskositäts-Meßwerts $X_\eta$ der Zwischenwert $X_1$ zunächst auf einen Geschwindigkeits-Meßwert $X_\theta$ normiert wird, der die oben genannte Geschwindigkeit θ repräsentiert. Anders gesagt es wird ein normierter Zwischenwert $X_1{}^*$ gemäß folgender Vorschrift gebildet:

$$X_1^* = \frac{X_1}{X_\theta} \qquad\qquad (7)$$

Der Geschwindigkeits-Meßwert $X_\theta$ wird, basierend auf der Erkenntnis, daß, insb. auch bei der Verwendung einer Wandleranordnung vom Biegeschwingungs-Typ als Meßaufnehmer 10, die die interne Reibung im Fluid verursachenden Bewegung, sehr stark mit der mittels des Sensors 17 oder auch mit der mittels des Sensors 18 örtlich erfaßten Bewegung des vibrierenden Meßrohrs 13 korrespondiert, bevorzugt mittels der Meßgerät-Elektronik 50, z.B. mittels interner Amplituden-Meßschaltung 55, vom wenigstens einen, ggf. bereits digitalisierten, Sensorsignal $s_1$ abgeleitet. Die Verwendung des wenigstens einen Sensorsignals $s_1$ hat nämlich den Vorteil, das nicht nur, wie bereits erwähnt, am mechanischen Aufbau der Wandleranordnung herkömmlicher Coriolis-Massedurchflußmesser praktisch keine grundsätzliche Änderungen erforderlich werden, sondern auch deren jeweilige Sensoranordnung praktisch unverändert weiter genutzt werden können.

Unter Verwendung des normierten Zwischenwerts $X_1^*$, kann der Viskositäts-Meßwert dann z.B. nach folgender Vorschrift ermittelt werden:

$$X_\eta = \frac{K_1}{K_f \cdot X_\rho} \cdot \left( \frac{X_1^*}{X_2} \right)^2 \qquad\qquad (8)$$

Der mit Gl.(8) eingeführte Korrekturfaktor $K_f$ dient dazu, den Dichte-Meßwert $X_\rho$ mit der aktuellen Schwingfrequenz des vibrierenden Meßrohrs 13 zu wichten.

Es sei an dieser Stelle nochmals darauf hingewiesen, daß das Sensorsignal $s_1$ bevorzugt proportional zu einer Geschwindigkeit einer, insb. lateralen, Auslenkungsbewegung des vibrierenden Meßrohrs 13; das Sensorsignal $s_1$ kann aber z.B. auch proportional zu einer auf das vibrierende Meßrohr 13 wirkenden Beschleunigung oder zu einem vom vibrierenden Meßrohr 13 zurückgelegten Weg sein. Für den Fall, daß das Sensorsignal $s_1$ im obigen Sinne geschwindigkeitsproportional ausgelegt ist, entspricht der Korrekturfaktor $K_f$ der Schwingfrequenz des vibrierenden Meßrohrs 13, während er z.B. bei einem wegproportionalen Sensorsignal $s_1$ gleich der dritten Potenz der Schwingfrequenz ist.

Die vorgenannten, dem Erzeugen des Viskositäts-Meßwertes $X_\eta$ dienenden Funktionen, symbolisiert durch die Gl. (1) bis (8) sind zumindest teilweise in einer Auswerte-Stufe 54 der Meßgerät-Elektronik 50 implementiert, die in vorteilhafter Weise z.B. ebenfalls mittels des Signalprozessors DSP oder z.B. auch mittels des oben erwähnten Mikrocomputers 55 realsiert sein kann.

Das Erstellen und Implementieren von entsprechenden Algorhitmen, die mit den vorbeschriebenen Gleichungen korrespondierenden oder die die Funktionsweise der Amplitudenregelschaltung 51 bzw. der Frequenzregelschaltung 52 nachbilden, sowie deren Übersetzung in in solchen Signalprozessoren ausführbaren Programm-Codes ist dem Fachmann an und für sich geläufig und bedarf daher keiner detaillierteren Erläuterung. Selbstverständlich können vorgenannte Gleichungen auch ohne weiteres ganz oder teilweise mittels entsprechender diskret aufgebauter, analoger und/oder digitaler Rechenschaltungen in der Meßgerät-Elektronik 50 dargestellt werden.

Das erfindungsgemäße Viskositäts-Meßgerät zeichnet sich auch dadurch aus, daß der von diesem gelieferte Viskositäts-Meßwert $X_\eta$ aufgrund seiner Unempfindlichkeit gegenüber den Inhomogenitäten im Fluid auch von geringer Querempfindlichkeit gegenüber Änderungen des Massendurchflusses oder der Dichte ist.

**Patentansprüche**

1. Viskositäts-Meßgerät für ein in einer Rohrleitung strömendes Fluid, welches Viskositäts-Meßgerät umfaßt:

- einen Meßaufnehmer (10), insb. vom Biegeschwingungstyp,

-- mit wenigstens einem mit der Rohrleitung kommunizierenden, im Betrieb vibrierenden Meßrohr (13) zum Führen des Fluids und zum Erzeugen von im Fluid wirkenden Reibungskräften,
-- mit einer Erregeranordnung (16) zum Vibrierenlassen des wenigstens einen Meßrohrs (13) sowie
-- mit einer Sensoranordnung (60) zum Erfassen von Vibrationen des Meßrohrs (13) und zum Erzeugen wenigstens eines diese repräsentierenden ersten Sensorsignals ($s_1$) und

- eine Meßgerät-Elektronik (50), die

-- einen die Erregeranordnung (16) speisenden Erregerstroms ($i_{exc}$) und
-- einen eine Viskosität des Fluids momentan repräsentierenden Viskositäts-Meßwert ($X_\eta$) liefert,

- wobei die Meßgerät-Elektronik (50)

-- vom wenigstens ersten Sensorsignal ($s_1$) ein dem Einstellen des Erregerstroms ($i_{exc}$) dienendes Amplitudenstellsignal ($y_{AM}$) ableitet, und
-- anhand des wenigstens ersten Sensorsignals ($s_1$) und anhand des Amplitudenstellsignals ($y_{AM}$) den Viskositäts-Meßwert ($X_\eta$) ermittelt.

2. Viskositäts-Meßgerät nach dem vorherigen Anspruch, wobei die Meßgerät-Elektronik (50) zum Erzeugen des Viskositäts-Meßwerks ($X_\eta$) anhand des wenigstens ersten Sensorsignals ($s_1$) einen Geschwindigkeits-Meßwert ($X_\theta$) ermittelt, der die Reibungskräfte im Fluid verursachende Bewegungen repräsentiert.

3. Viskositäts-Meßgerät nach Anspruch 1 oder 2, wobei die Meßgerät-Elektronik (50) zum Erzeugen des Viskositäts-Meßwerts ($X_\eta$) anhand des Amplitudenstellsignals ($y_{AM}$) einen mit dem Erregerstrom ($i_{exc}$) korrespondierenden und die im Fluid wirkenden Reibungskräfte repräsentierenden ersten internen Zwischenwert ($X_1$) ermittelt.

4. Viskositäts-Meßgerät nach Anspruch 1 oder 2,

- wobei die Meßgerät-Elektronik (50)

-- einen mit dem Erregerstrom ($i_{exc}$) korrespondierenden und die im Fluid wirkenden Reibungskräfte repräsentierenden ersten internen Zwischenwert ($X_1$) und
-- einen Inhomogenitäten im Fluid repräsentierenden zweiten internen Zwischenwert ($X_2$) erzeugt, und

- wobei die Meßgerät-Elektronik (50) den Viskositäts-Meßwert ($X_\eta$) unter Verwendung des ersten und des zweiten internen Zwischenwerts ($X_1$, $X_2$) ermittelt.

5. Viskositäts-Meßgerät nach Anspruch 4, wobei die Meßgerät-Elektronik (50) den ersten internen Zwischenwert ($X_1$) anhand des dem Einstellen des Erregerstroms ($i_{exc}$) dienenden Amplitudenstellsignals ($y_{AM}$) ermittelt.

6. Viskositäts-Meßgerät nach einem der Ansprüche 3 bis 5, wobei die Meßgerät-Elektronik (50) den zweiten internen Zwischenwert ($X_2$) anhand des Erregerstroms ($i_{exc}$) ermittelt.

7. Viskositäts-Meßgerät nach einem der Ansprüche 3 bis 6,

- wobei die Meßgerät-Elektronik (50) einen flüchtigen Datenspeicher (RAM) umfaßt, in dem ein Sampling (AF) erster interner Zwischenwerte ($X_1$) vorgehalten ist und
- wobei die Meßgerät-Elektronik (50) den zweiten internen Zwischenwert ($X_2$) mittels des Samplings (AF) erzeugt.

8. Viskositäts-Meßgerät nach dem vorherigen Anspruch, wobei zum Erzeugen des zweiten internen Zwischenwerts ($X_2$) eine mittels des Samplings (AF) geschätzte Standardabweichung ($s_{iexc}$) des ersten internen Zwischenwerts ($X_1$) dient.

9. Viskositäts-Meßgerät nach einem der vorherigen Ansprüche, wobei das vibrierende Meßrohr (13) zum Erzeugen von im Fluid wirkenden Reibungskräften zumindest anteilig in einem Biegeschwingungsmode schwingt.

**10.** Verfahren zum Ermitteln einer Viskosität eines in einer Rohrleitung strömenden Fluids, welches Verfahren folgende Schritte umfaßt:

- Einspeisen eines Erregerstroms ($i_{exc}$) in eine mit einem das Fluid führenden Meßrohr (13) mechanisch gekoppelten Erregeranordnung (16) zum Bewirken von mechanischen Schwingungen, insb. Biegeschwingungen, des Meßrohrs (13),
- Vibrierenlassen des Meßrohrs (13) zum Erzeugen von inneren Reibungskräften im Fluid,
- Erfassen von Vibrationen des Meßrohrs (13) zum Erzeugen wenigstens eines diese repräsentierenden ersten Sensorsignals ($s_1$)
- Ableiten eines dem Einstellen des Erregerstroms ($i_{exc}$) dienenden Amplitudenstellsignals ($y_{AM}$) vom wenigstens ersten Sensorsignal ($s_1$), und
- Ermitteln eines die Viskosität repräsentierenden Viskositäts-Meßwerts ($X_\eta$) anhand des wenigstens ersten Sensorsignals ($s_1$) und anhand des Amplitudenstellsignals ($y_{AM}$).

**11.** Verfahren nach dem vorherigen Anspruch, weiters umfassend einen Schritt des Einstellens des Erregerstroms ($i_{exc}$) unter Verwendung des Amplitudenstellsignals ($y_{AM}$).

**12.** Verfahren nach Anspruch 10 oder 11, weiters umfassend einen Schritt des Ermittelns eines Geschwindigkeits-Meßwerts ($X_\theta$) unter Verwendung des Sensorsignals ($s_1$), der eine Geschwindigkeit einer die im Fluid wirkende Reibungskräfte verursachenden Bewegung repräsentiert.

**Claims**

**1.** Viscosity measuring device for a fluid flowing through a pipe, said viscosity measuring device comprising:

- a sensor (10), particularly a flexural vibration-type sensor,

-- with at least one measuring tube (13) that communicates with the pipe and vibrates during operation and is designed to conduct the fluid and to generate friction forces acting in the fluid
-- with an exciter arrangement (16) to allow the at least one measuring tube (13) to vibrate, and
-- with a sensor arrangement (60) to measure vibrations of the measuring tube (13) and to generate at least a first sensor signal ($s_1$) representing these vibrations, and

- measuring device electronics (50) that supply

-- exciting current ($I_{exc}$) providing power to the exciter arrangement (16), and
-- a viscosity measured value ($X_n$) currently representing a viscosity of the fluid,

- wherein the measuring device electronics (50)

-- derive an amplitude control signal ($Y_{AM}$) from the at least first sensor signal ($s_1$) to control the exciting current ($I_{exc}$)
-- determine the viscosity measured value ($X_n$) using the at least one sensor signal ($s_1$) and using the amplitude control signal ($Y_{AM}$).

**2.** Viscosity measuring device as claimed in the previous claim, wherein, in order to generate the viscosity measured value ($X_n$) using the at least first sensor signal ($s_1$), the measuring device electronics (50) determine a velocity measured value ($X_\theta$), said velocity measured value representing the movements causing the friction forces in the fluid.

**3.** Viscosity measuring device as claimed in Claim 1 or 2, wherein, in order to generate the viscosity measured value ($X_n$) using the amplitude control signal ($Y_{AM}$) the measuring device electronics (50) determine a first internal intermediate value ($X_1$) that corresponds to the exciting current ($I_{exc}$) and represents the friction forces acting in the fluid.

**4.** Viscosity measuring device as claimed in Claim 1 or 2,

- wherein the measuring device electronics (50)

-- generate a first internal intermediate value ($X_1$) that corresponds to the exciting current ($I_{exc}$) and represents the friction forces acting in the fluid and

-- generate a second internal intermediate value ($X_2$) that represents inhomogeneity in the fluid, and

- wherein the measuring device electronics (50) determine the viscosity measured value ($X_n$) using the first and second internal intermediate value ($X_1$, $X_2$).

5. Viscosity measuring device as claimed in Claim 4, wherein the measuring device electronics (50) determine the first internal intermediate value ($X_1$) using the amplitude control signal ($Y_{AM}$) that is used to control the exciting current ($I_{exc}$).

6. Viscosity measuring device as claimed in one of the Claims 3 to 5, wherein the measuring device electronics (50) determine the second internal intermediate value ($X_2$) using the exciting current ($I_{exc}$).

7. Viscosity measuring device as claimed in one of the Claims 3 to 6,

- wherein the measuring device electronics (50) comprise a volatile data memory (RAM) which contains a sampling (AF) of first internal intermediate values ($X_1$)
- and wherein the measuring device electronics (50) generate the second internal intermediate value ($X_2$) using the sampling (AF).

8. Viscosity measuring device as claimed in the previous claim, wherein a standard deviation ($_{Siexc}$) of the first internal intermediate value ($X_1$), which is estimated using the sampling (AF), is used for the purpose of generating the second internal intermediate value ($X_2$).

9. Viscosity measuring device as claimed in one of the previous claims, wherein the vibrating measuring tube (13) vibrates at least in part in a flexural vibration mode to generate friction forces acting in the fluid.

10. Method to determine a viscosity of a fluid flowing through a pipe, said method comprising the following steps:

- an exciting current ($I_{exc}$) is fed into an exciter arrangement (16) that is mechanically coupled to a measuring tube (13) conducting the fluid in order to effectuate mechanical vibrations, particularly flexural vibrations, of the measuring tube (13)
- the measuring tube (13) is allowed to vibrate in order to generate internal friction forces in the fluid
- vibrations of the measuring tube (13) are measured to generate at least a first sensor signal ($_{S1}$) representing these vibrations
- an amplitude control signal ($Y_{AM}$), which is used to control the exciting current ($I_{exc}$), is derived from the at least first sensor signal ($_{S1}$), and
- a viscosity measured value ($X_n$) representing the viscosity is determined using the at least first sensor signal ($_{S1}$) and using the amplitude control signal ($Y_{AM}$).

11. Method as claimed in the previous claim, further comprising a step to set the exciting current ($I_{exc}$) using the amplitude control signal ($Y_{AM}$).

12. Method as claimed in Claim 10 or 11, further comprising a step to determine a velocity measured value ($X_\theta$) using the sensor signal ($s_1$), said velocity measured value representing a velocity of a movement causing the friction forces acting in the fluid.

**Revendications**

1. Appareil de mesure de viscosité pour un fluide s'écoulant dans une conduite, lequel appareil de mesure de viscosité comprend :

- un transmetteur de mesure (10), notamment du type à vibrations de flexion,

-- avec au moins un tube de mesure (13) vibrant en fonctionnement, communiquant avec la conduite, destiné à acheminer le fluide et à générer les forces de frottement agissant dans le fluide,

-- avec un circuit excitateur (16) destiné à faire entrer en vibrations l'au moins un tube de mesure (13), ainsi que

-- avec un circuit capteur (60) destiné à la détection de vibrations du tube de mesure (13) et destiné à la génération d'au moins un premier signal de capteur ($s_1$) représentant ces vibrations et

- une électronique d'appareil de mesure (50), qui fournit

-- un courant d'excitation ($i_{exe}$) alimentant le circuit excitateur et
-- une valeur mesurée de viscosité ($X_\eta$) représentant momentanément une viscosité du fluide,

- pour lequel l'électronique d'appareil de mesure (50)

-- dérive de l'au moins premier signal de capteur ($s_1$) un signal de réglage d'amplitude ($y_{AM}$) servant au réglage du courant d'excitation ($i_{exc}$), et
-- détermine au moyen du premier signal de capteur ($s_i$) et au moyen du signal de réglage d'amplitude ($y_{AM}$) la valeur mesurée de viscosité ($X_\eta$).

2. Appareil de mesure de viscosité selon la revendication précédente, pour lequel l'électronique d'appareil de mesure (50) détermine, pour la génération de la valeur mesurée de viscosité ($X_\eta$), au moyen de l'au moins premier signal de capteur ($s_1$) une valeur mesurée de vitesse ($X_\theta$), qui représente les mouvements occasionnant les forces de frottement dans le fluide.

3. Appareil de mesure de viscosité selon la revendication 1 ou 2, pour lequel l'électronique d'appareil de mesure (50) détermine, pour la génération de la valeur mesurée de viscosité ($X_\eta$), au moyen du signal de réglage d'amplitude ($y_{AM}$), une première valeur intermédiaire interne ($X_1$) correspondant au courant d'excitation ($i_{exc}$) et représentant les forces de frottement agissant dans le fluide.

4. Appareil de mesure de viscosité selon la revendication 1 ou 2,

- pour lequel l'électronique d'appareil de mesure (50)

-- génère une première valeur intermédiaire interne ($X_1$) correspondant au courant d'excitation ($i_{exc}$) et représentant les forces de frottement agissant dans le fluide, et
-- génère une deuxième valeur intermédiaire interne ($X_2$) représentant les inhomogénéités dans le fluide, et

- pour lequel l'électronique d'appareil de mesure (50) détermine la valeur mesurée de viscosité ($X_\eta$) à l'aide de la première et de la deuxième valeur intermédiaire interne ($X_1$, $X_2$).

5. Appareil de mesure de viscosité selon la revendication 4, pour lequel l'électronique d'appareil de mesure (50) détermine la première valeur intermédiaire interne ($X_1$) au moyen du signal de réglage d'amplitude ($y_{AM}$) servant au réglage du courant d'excitation ($i_{exc}$).

6. Appareil de mesure de viscosité selon l'une des revendications 3 à 5, pour lequel l'électronique d'appareil de mesure (50) détermine la deuxième valeur intermédiaire interne ($X_2$) à l'aide du courant d'excitation ($i_{exc}$).

7. Appareil de mesure de viscosité selon l'une des revendications 3 à 6,

- pour lequel l'électronique d'appareil de mesure (50) comprend une mémoire de données volatile (RAM), dans laquelle est mémorisée un échantillon (AF) de premières valeurs intermédiaires internes ($X_1$) et
- pour lequel l'électronique d'appareil de mesure (50) génère la deuxième valeur intermédiaire interne ($X_2$) au moyen de l'échantillon (AF).

8. Appareil de mesure de viscosité selon la revendication précédente, pour lequel un écart-type estimé ($s_{iexc}$) de la première valeur intermédiaire interne ($X_1$) sert à la génération de la deuxième valeur intermédiaire interne ($X_2$) au moyen de l'échantillon (AF).

9. Appareil de mesure de viscosité selon l'une des revendications précédentes, pour lequel le tube de mesure (13) vibre au moins partiellement en mode de vibrations de flexion pour la génération des forces de frottement agissant dans le fluide.

10. Procédé destiné à la détermination d'une viscosité d'un fluide s'écoulant dans une conduite, lequel procédé comprend les étapes suivantes :

- Injection d'un courant d'excitation ($i_{exc}$) dans un circuit d'excitation (16) couplé mécaniquement avec un tube de mesure (13) acheminant le fluide, pour la génération de vibrations mécaniques, notamment de vibrations de flexion, du tube de mesure (13),
- Entrée en vibrations du tube de mesure (13) pour la génération des forces de frottements intérieures dans le fluide,
- Détection des vibrations du tube de mesure (13) pour la génération d'au moins un premier signal de capteur ($s_1$) représentant ces vibrations,
- Dérivation d'un signal de réglage d'amplitude ($y_{AM}$) de l'au moins un signal de capteur ($s_1$), servant au réglage du courant d'excitation ($i_{exc}$), et
- Détermination d'une valeur mesurée de viscosité ($X_\eta$) représentant la viscosité, au moyen de l'au moins un signal de capteur ($s_1$) et au moyen du signal de réglage d'amplitude ($y_{AM}$).

11. Procédé selon la revendication précédente, comprenant en outre une étape de réglage du courant d'excitation ($i_{exc}$) à l'aide du signal de réglage d'amplitude ($y_{AM}$).

12. Procédé selon la revendication 10 ou 11, comprenant en outre une étape de détermination d'une valeur mesurée de vitesse ($X_\beta$) à l'aide du signal de capteur ($s_1$), qui représente une vitesse du mouvement occasionné par les forces de frottement agissant dans le fluide.

Fig. 1

*Fig. 2*

Fig. 3

Fig. 4

Fig. 5

*Fig. 6*

EP 1 291 639 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4524610 A
- WO 9516897 A
- US 6006609 A
- US 4801897 A
- US 5648616 A
- US 5796011 A
- US 5301557 A
- US 5357811 A
- US 5557973 A
- US 5602345 A
- EP 866319 A
- US 4187721 A
- US 4876879 A
- US 5687100 A
- US 6073495 A